# EUROPÄISCHE PATENTSCHRIFT

(11) **EP 2 427 742 B1**
(45) Veröffentlichungstag und Bekanntmachung des Hinweises auf die Patenterteilung: **18.12.2019**
(21) Anmeldenummer: 10713910.7
(22) Anmeldetag: 08.04.2010
(51) Int. Cl.: G01F 23/288, G01T 1/20

(54) **RADIOMETRISCHES MESSGERÄT ZUR MESSUNG EINES FÜLLSTANDS ODER EINER DICHTE EINES FÜLLGUTS**
RADIOMETRIC MEASURING DEVICE FOR MEASURING A FILLING LEVEL OR A DENSITY OF A FILLING MATERIAL
APPAREIL DE MESURE RADIOMÉTRIQUE POUR LA MESURE DU NIVEAU DE REMPLISSAGE OU DE LA DENSITÉ D'UN PRODUIT DE REMPLISSAGE

(30) Priorität: 05.05.2009 DE 102009002816
(43) Veröffentlichungstag der Anmeldung: 14.03.2012
(73) Patentinhaber: Endress+Hauser SE+Co. KG, 79689 Maulburg (DE)
(72) Erfinder: DAMM, Hartmut, 79331 Teningen (DE); WEIDENBRUCH, Simon, 79539 Lörrach (DE); SCHÄUBLE, Robert, 79737 Herrischried (DE)
(74) Vertreter: Andres, Angelika Maria
(86) Internationale Anmeldenummer: PCT/EP2010/054653
(87) Internationale Veröffentlichungsnummer: WO 2010/127920

(56) Entgegenhaltungen:
- JP-A- 9 080 156
- NISTOR A: "MODERNE RADIOMETRISCHE FULLSTANDMESSTECHNIK" MESSEN PRUFEN AUTOMATISIEREN, HANS HOLZMANN VERLAG. BAD WORISHOFEN, DE, Nr. 10, 1. Oktober 1988 (1988-10-01), Seiten 496-500, XP000031866
- GRAZIOSO R F ET AL: "APD arrays for scintillating fiber readout" NUCLEAR SCIENCE SYMPOSIUM, 1999. CONFERENCE RECORD. 1999 IEEE 24-30 OCTOBER 1999, PISCATAWAY, NJ, USA,IEEE, US LNKD- DOI:10.1109/NSSMIC.1999.845769, Bd. 2, 24. Oktober 1999 (1999-10-24), Seiten 722-724, XP010500578 ISBN: 978-0-7803-5696-2

## Beschreibung

Die Erfindung betrifft ein radiometrisches Messgerät, das dazu dient eine physikalische Messgröße, insb. einen Füllstand oder eine Dichte, eines in einem Behälter befindlichen Füllguts zu messen, oder ein Über- oder Unterschreiten eines vorgegebenen Grenzwerts für die physikalische Messgröße zu überwachen. Radioaktive Messgeräte umfassen hierzu radioaktive Strahler, die im Betrieb radioaktive Strahlung durch den Behälter senden, und Detektoren, dazu dienen eine durch den Behälter hindurch dringende von der zu messenden physikalischen Messgröße abhängige Strahlungsintensität zu detektieren und in ein elektrisches Ausgangssignal umzuwandeln.

Radiometrische Messgeräte werden üblicherweise immer dann eingesetzt, wenn herkömmliche Messgeräte aufgrund besonders rauer Bedingungen am Messort nicht einsetzbar sind. Sehr häufig herrschen z.B. am Messort extrem hohe Temperaturen und Drücke oder es sind chemisch und/oder mechanisch sehr aggressive Umgebungseinflüsse vorhanden, die den Einsatz anderer Messmethoden unmöglich machen.

In der radiometrischen Messtechnik wird ein radioaktiver Strahler, z.B. ein Co 60 oder Cs 137 Präparat, in einen Strahlenschutzbehälter eingebracht und an einem Messort, z.B. einem mit einem Füllgut gefüllten Behälter angebracht. Ein solcher Behälter kann z.B. ein Tank, ein Container, ein Rohr, ein Förderband oder eine beliebige andere Behälterform sein.

Der Strahlenschutzbehälter weist eine Ausnehmung auf, durch die die von dem zur Messung positionierten Strahler ausgesendete Strahlung durch eine Wand des Strahlenschutzbehälters hindurch ausgestrahlt wird.

Üblicherweise wird eine Abstrahlungsrichtung ausgewählt, bei der die Strahlung denjenigen Bereich des Behälters durchdringt, der messtechnisch erfasst werden soll. Auf der gegenüberliegenden Seite wird die vom Füllstand bzw. von der Dichte des Füllguts abhängige aus dem Behälter über einen messtechnisch zu erfassenden Bereich austretende Strahlungsintensität mit einem Detektor quantitativ erfasst. Die austretende Strahlungsintensität ist abhängig von der geometrischen Anordnung und der Absorption. Letztere ist bei der Füllstandsmessung und bei der Überwachung eines Über- oder Unterschreitens eines vorbestimmten Füllstandes abhängig von der Menge des Füllguts im Behälter und bei der Dichtemessung von der Dichte des Füllguts. Folglich ist die austretende Strahlungsintensität ein Maß für den aktuellen Füllstand, das Über- oder Unterschreiten des vorbestimmten Füllstandes bzw. die aktuelle Dichte des Füllguts im Behälter.

Als Detektor werden heute üblicher Weise Szintillationsdetektoren mit einem Szintillator, z.B. einem Szintillationstab, und einem Lichtempfänger, wie z.B. einem Photomultiplier, eingesetzt. Der Szintillationsstab besteht aus einem speziellen Kunststoff, wie z.B. Polystyrol (PS) oder Polyvinyltoluol (PVT), der optisch sehr rein ist. Gammastrahlung löst im Szintillationsmaterial Lichtblitze aus, deren Licht vom Photomultiplier erfasst und in elektrische Impulse umgesetzt wird. An den Photomultplier ist eine Messgerätelektronik angeschlossen, die anhand der elektrischen Impulse ein Impulsrate bestimmt, mit der die Impulse auftreten. Die Impulsrate abhängig von der Strahlungsintensität und somit ein Maß für die zu messende physikalische Größe.

Massive Szintillationsstäbe weisen jedoch den Nachteil auf, dass sie aufgrund ihrer Abmessungen gar nicht oder nur sehr schlecht an heute bereits in sehr kleiner Bauform erhältliche Lichtempfänger angeschlossen werden können, da dann ein Großteil des Lichts ungenutzt am Lichtempfänger vorbei strahlen würde. Entsprechend werden sie üblicher Weise in Verbindung mit großen und teueren Photomultipliern eingesetzt.

Hinzu kommt, dass bei massiven Szintillationsstäben aufgrund von herstellungs-bedingten Oberflächenfehlern ein Teil des Lichts seitlich aus dem Stab austritt und damit für die messtechnische Erfassung verloren ist.

Es sind Detektoren bekannt, bei denen anstelle von massiven Szinitillationsstäben szintillierende Fasern eingesetzt werden.
Szintillationsfasern weisen in der Regel einen Durchmesser in der Größenordnung von 1 mm bzw. bei Fasern mit eckigem Querschnitt eine Querschnittsfläche in der Größenordnung von 1 mm² auf, und können dementsprechend sehr wohl an kleine Lichtempfänger angeschlossen werden.

In der JP 09 080156 A ist eine radiometrische Messanordnung beschrieben, die dazu dient eine von einem in einem Behälter befindlichen radioaktiven Füllgut ausgehende Strahlendosis zu messen. Hierzu wird ein Detektor verwendet, der eine spiralförmig um den Behälter gewickelte Szintillationsfaser umfasst, an deren beiden Enden jeweils ein Lichtempfänger, hier ein Photomultiplier oder eine Avanlanche Photo Diode, angeschlossen ist. Von dem Füllgut ausgehende radiometrische Strahlung erzeugt Lichtblitze an von der Strahlung getroffenen Orten entlang der Faser, die sich zu beiden Enden der Szintillationsfaser hin ausbreiten. An die beiden Lichtempfänger ist eine Signalverarbeitung angeschlossen, die einen Laufzeitunterschied der auf ein und denselben Lichtblitz zurückzuführenden Empfangssignale bestimmt und hieraus anhand der Ausbreitungsgeschwindigkeit der Lichtsignale in der Faser den Entstehungsort des zugehörigen Lichtblitzes bestimmt.

Diese Anordnung ist in der beschriebenen Form jedoch nur in Verbindung mit radioaktiven Füllgütern einsetzbar, da die Faser den Behälter allseits umgibt. In Verbindung mit der oben genannten Messanordnung, bei der eine außerhalb des Behälters angeordnete Strahlenquelle verwendet wird, würde diese Anordnung im wesentlichen die Strahlungsleistung der Quelle messtechnisch erfassen. Außerdem ist die Länge der Szintillationsfaser beschränkt, da das Licht in der Faser gedämpft wird. Entsprechend ist die Anordnung nur in Verbindung mit relativ kleinen Behältern einsetzbar.

Eine einzelne Szintillationsfaser weist gegenüber einem massiven Szintillationsstab den Nachteil auf, dass sie eine wesentlich geringere durchstrahlte Masse aufweist. Dementsprechend ist die Strahlungsleistung die auf eine einzelne Szintillationsfaser auftrifft im Vergleich sehr gering.

Diese geringe durchstrahlte Masse kann beispielsweise durch die in der EP 1 068 494 B1 beschriebene Messanordnung kompensiert werden, bei der ein Detektor verwendet wird, in dem mehrere Szintillationsfasern zu einem Bündel zusammengefasst sind, dessen Durchmesser größer als der Durchmesser der einzelnen Fasern ist. Das gesamte Bündel ist endseitig an einen Photomultiplier angeschlossen, der das über die Szintillationsfasern zugeführt Licht in ein elektrisches Signal umwandelt.

Aufgrund der gegenüber einer einzelnen Faser erhöhten durchstrahlten Masse des Faserbündels erhöht sich die vom Detektor empfangene Strahlungsleistung. Allerdings kommt hier immer noch ein großer teurer Photomultiplier zum Einsatz. Die Länge des Bündels ist aufgrund der Dämpfung des Szintillationslicht in den Fasern begrenzt. Außerdem sind Faserbündel verhältnismäßig starr und unflexibel. Hierdurch ergeben sich Einschränkungen für den messtechnisch mit dem Szintillationsfaserbündel erfassbaren Bereich.

Es ist eine Aufgabe der Erfindung ein radiometrisches Messgerät zur Messung einer physikalischen Messgröße, insb. eines Füllstand oder einer Dichte, eines in einem Behälter befindlichen Füllguts, oder zur Überwachung eines Über- oder Unterschreiten eines vorgegebenen Grenzwerts für die physikalische Messgröße mit einem radioaktiven Strahler, der im Betrieb radioaktive Strahlung durch den Behälter sendet, und einem Detektor mit mindestens einem Szintillator und mindestens einem daran angeschlossenen Lichtempfänger, der eine durch den Behälter hindurch dringende von der zu messenden physikalischen Messgröße abhängige Strahlungsintensität detektiert, anzugeben, mit dem in einem messtechnisch von dem Detektor zu erfassenden äußerst flexibel vorgebbaren Bereich eine sehr genaue Messung der Strahlungsintensität durchführbar ist.

Hierzu besteht die Erfindung in einem radiometrisches Messgerät zur Messung eines Füllstands oder einer Dichte eines in einem Behälter befindlichen Füllguts, und/oder zur Überwachung eines Über- oder Unterschreiten eines vorgegebenen Grenzwerts für den Füllstand oder die Dichte, mit
- einem außenseitlich am Behälter montierten radioaktiven Strahler, der im Betrieb radioaktive Strahlung durch den Behälter sendet, und
- einem auf einer dem Strahler gegenüberliegenden Seite außerhalb des Behälters angeordneten Detektor, der dazu dient eine durch den Behälter hindurch dringende von dem Füllstand oder der Dichte abhängige Strahlungsintensität zu empfangen und in ein elektrisches Ausgangssignal umzuwandeln,
   -- der einen Träger aufweist, auf den mindestens eine Szintillationsfaser aufgewickelt ist, die darauf auftreffende radiometrische Strahlung in Lichtblitze umwandelt, deren Licht sich in der jeweiligen Szintillationsfaser zu deren Enden hin ausbreitet,
   - der mindestens ein Array von im Geiger Mode betriebenen Avalanche Photodioden umfasst, die darauf auftreffendes Licht in ein elektrisches Signal umwandeln, wobei
   -- mindestens ein Ende jeder Szintillationsfaser an Avalanche Photodioden eines der Arrays angeschlossen ist, und
   - der eine an die Avalanche Photodioden angeschlossene Messgerätelektronik aufweist, die anhand der elektrischen Signale der Avalanche Photodioden das elektrische Ausgangssignal erzeugt.

Gemäß einer bevorzugten Ausgestaltung weisen die an die Arrays angeschlossenen Enden der Szintillationsfasern eine Querschnittsfläche auf, die mehrere Avanlanche Photodioden überdeckt.

Gemäß einer weiteren Ausgestaltung sind alle an ein Ende einer Szintillationsfaser angeschlossenen Avalanche Photodioden elektrisch parallel geschaltet.
Gemäß einer weiteren Ausgestaltung sind alle Avalanche Photodioden eines Arrays elektrisch parallel geschaltet.

Gemäß einer Weiterbildung sind alle Arrays oder die Arrays und die Messgerätelektronik im Inneren des Trägers angeordnet.

Gemäß einer anderen Weiterbildung
- sind die Arrays und die Messgerätelektronik in einem
   außerhalb des Trägers angeordneten explosionsgeschützten
   Gehäuse angeordnet, und
- die an die Arrays angeschlossenen Enden der Szintiitationsfasern
   sind über eine explosionsgeschützte Durchführung in das
   Gehäuse eingeführt.

Gemäß einer weiteren Weiterbildung sind entlang des Trägers mehrere Szintillationsfasern aufgewickelt, die jeweils einen Teilbereich des Trägers umschließen.
Gemäß einer anderen Weiterbildung weist mindestens eine der Szintillationsfasern entlang einer Längsachse des Trägers mindestens einen Bereich mit einer Wicklungsdichte auf, die in Bezug zu einer Wicklungsdichte außerhalb des Bereichs höher ist.

Gemäß einer weiteren Weiterbildung sind eine oder mehrere Szintillationsfasern in zwei oder mehr Wicklungslagen übereinander gewickelt.
Weiter umfasst die Erfindung ein Verfahren zum Betrieb eines erfindungsgemäßen Messgeräts, bei dem beide Enden einer oder mehrerer parallel zueinander verlaufender Szintillationsfasern jeweils an ein Array angeschlossen sind, und die Messgerätelektronik anhand der Ausgangssignale der an die ersten Enden der Szintillationsfasern und der Ausgangssignale der an die zweiten Enden der Szintillationsfasern angeschlossenen Arrays ein Strahlungsintensitätsprofil ableitet, das die auf die Szintillationsfasern auftreffende Strahlungsintensität als Funktion des Ortes entlang der Szintillationsfasern wiedergibt.

Ebenso umfasst sie eine Ausgestaltung dieses Verfahrens, bei der
- anhand der Ausgangssignale der an die ersten Enden
   angeschlossenen Arrays und der an die zweiten Enden
   angeschlossenen Arrays fortwährend Laufzeitdifferenzen zwischen
   den beiden Signallaufzeiten, die Licht eines in einer Szintillationsfaser
   ausgelösten Lichtblitzes auf den beiden vom Entstehungsort des
   Lichtblitzes abhängigen unterschiedlichen Laufstrecken zu deren Enden
   benötigt, bestimmt werden,
- eine Häufigkeitsverteilung aufgezeichnet wird, die angibt mit welcher
   Häufigkeit die Laufzeitdifferenzen auftreten, und
- hieraus das Strahlungsintensitätprofil bestimmt wird, das die
   Strahlungsintensität angibt, der die den Laufzeitdifferenzen zugeordneten
   Orte entlang der Szintillationsfasern ausgesetzt sind.

Alternativ umfasst sie eine Weiterbildung dieses Verfahrens, bei der
- Licht der in den Szintillationsfasern durch radiometrisch Strahlung
   ausgelösten Lichtblitzes auf den beiden vom Entstehungsort des
   Lichtblitzes abhängigen unterschiedlichen Laufstrecken zu deren Enden
   eine von der Länge der jeweiligen Lauftrecke abhängige
   Dämpfung erfährt, die sich in der Amplitude der
   Ausgangssignale der an die Szintillationsfasern angeschlossenen
   Arrays wieder spiegelt,
- fortwährend die Amplitudenverhältnisse zwischen den Amplituden
   der Ausgangssignale der an die ersten Enden angeschlossenen
   Arrays und den Amplituden der Ausgangssignale der an die zweiten Enden
   angeschlossenen Arrays gebildet werden,
- eine Häufigkeitsverteilung aufgezeichnet wird, die angibt mit welcher
   Häufigkeit die Amplitudenverhältnisse auftreten, und
- hieraus ein Strahlungsintensitätprofil bestimmt wird, das die
   Strahlungsintensität angibt, der die den Amplitudenverhältnissen
   zugeordneten Orte entlang der Szintillationsfasern ausgesetzt sind.

Die Erfindung weist den Vorteil auf, dass die durchstrahlte Masse von aufgewickelten Szintillationsfasern deutlich höher ist als die durchstrahlte Masse ausgestreckter Fasern. Zusätzlich ist die in den Szintiallationsfasern durch Strahlung entstehende Lichtmenge durch die im Geiger Mode betriebenen APDs extrem genau und praktisch ohne Verluste messbar.

Ein weiterer Vorteil besteht darin, dass aufgrund der im Geiger Mode betriebenen ADPs mehrere Szintillationsfasern verwendet werden können, die parallel oder in mehreren Wicklungslagen übereinander angeordnet werden können, und dass einzelne oder mehrere Szintillationsfasern entlang des messtechnisch zu erfassenden Bereichs in einzelnen Zonen übereinander angeordnet werden können, indem die daran angeschlossenen APDs oder die gesamten Arrays parallel betrieben werden. Ein weiterer Vorteil besteht darin, dass nicht nur die Strahlungsintenstität insgesamt, sondern anhand von an beiden Enden der Szintillationsfasern angeschlossenen APDs auch sehr detaillierte Strahlungsintensitätsprofile entlang des messtechnisch vom Detektor erfassten Bereichs erstellt werden können. Hierbei ist mit den aufgewickelten Szintillationsfasern eine extrem hohe Ortsauflösung erzielbar.

Die Erfindung und weitere Vorteile werden nun anhand der Figuren der Zeichnung, in denen fünf Ausführungsbeispiele dargestellt sind, näher erläutert; gleiche Teile sind in den Figuren mit gleichen Bezugszeichen versehen.
- Fig. 1 zeigt:: eine radiometrischen Messanordnung;
- Fig. 2 zeigt:: ein Array von Avalanche Photodioden mit einem daran angeschlossenen Szintillationsfaserende;
- Fig. 3 zeigt:: ein Array von Avalanche Photodioden mit neun daran angeschlossenen Szintillationsfaserenden;
- Fig. 4 zeigt:: eine Schaltplan mit im Geiger Mode betriebenen elektrisch parallel geschalteten Avalanche Photdioden;
- Fig. 5 zeigt:: einen Detektor mit einem explosionsgeschützten Gehäuse zur Aufnahme der Arrays und der Messgerätelektronik;
- Fig. 6 zeigt:: eine Messanordnung zur Aufzeichnung eines Strahlungsintensitätsprofils;
- Fig. 7 zeigt:: einen Träger mit einer darauf aufgewickelten Szintillationsfaser, die einen Bereich mit höherer Wicklungsdichte aufweist;
- Fig. 8 zeigt:: einen Träger, auf dem Szintillationsfasern in mehreren Wicklungslagen aufgebracht sind;
- Fig. 9 zeigt:: eine auf eine ebene Platte aufgewickelte Szintillationsfaser; und
- Fig. 10 zeigt:: einen Träger, der einzelne Teilbereiche aufweist, auf denen jeweils eine Szintillationsfaser aufgewickelt ist.

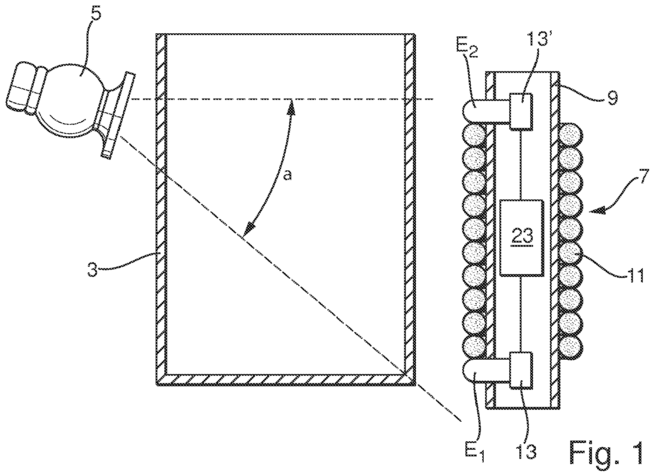

Fig. 1 zeigt eine Prinzipskizze einer Messanordnung mit einem erfindungsgemäßen radiometrischen Messgerät zur Messung einer physikalischen Messgröße, insb. eines Füllstands oder einer Dichte, eines in einem Behälter befindlichen Füllguts und/oder zur Überwachung eines Über- oder Unterschreitens eines vorgegebenen Grenzwerts für die physikalische Messgröße.

Sie umfasst einen mit einem Füllgut 1 befüllbaren Behälter 3 und einen außenseitlich am Behälter 3 montierten radioaktiven Strahler 5, der im Messbetrieb radioaktive Strahlung durch den Behälter 3 sendet. Der Strahler 5 umfasst einen Strahlenschutzbehälter, in den ein radioaktives Präparat, z.B. ein Co 60 oder Cs 137 Präparat, eingebracht ist. Der Strahlenschutzbehälter weist eine Öffnung auf, durch die die Strahlung in einer durch die Ausrichtung der Öffnung vorgegebenen Abstrahlrichtung austritt und den Behälter 3 durchstrahlt. Es bildet sich ein Strahlungskegel um die Abstrahlrichtung mit einem Öffnungswinkel α, der einen messtechnisch zu erfassenden Bereich des Behälters 3 durchstrahlt.

Auf einer dem Strahler 5 gegenüberliegenden Seite des Behälters 3 ist ein hier im Schnitt dargestellter Detektor 7 angeordnet, der dazu dient eine durch den Behälter 3 hindurch dringende von der physikalischen Messgröße abhängige Strahlungsintensität über einen anwendungs-spezifisch vorgegebenen messtechnisch vom Detektor 7 zu erfassenden Bereich zu empfangen und in ein elektrisches Ausgangssignal umzuwandeln.

Der Detektor 7 umfasst einen Träger 9 und mindestens eine auf den Träger 9 aufgewickelte Szintillationsfaser 11. Szintillationsfasern 11 wandeln darauf auftreffende radiometrische Strahlung in Lichtblitze um, deren Licht sich innerhalb der jeweiligen Szintillationsfaser 11 zu beiden Seiten bis zu deren Enden E1, E2 ausbreitet. Durch das Aufwickeln der Szintillationsfasern 11 wird eine deutliche Erhöhung der durchstrahlten Masse erzielt. Eine aufgewickelte Szintillationsfaser 11 nimmt dementsprechend deutlich mehr Strahlungsleistung auf, als eine einzelne ausgestreckte Faser.

Mindestens ein Ende E1, E2 jeder Szintillationsfaser 11 ist an ein Array 13, 13' von im Geiger Mode betriebenen Avalanche Photodioden (APD) angeschlossen. Wie bereits erwähnt, ist die Länge der Szintillationsfasern 11 aufgrund der in den Szintillationsfasern 11 auftretenden Dämpfung des Lichts auf eine vorgegebene Maximallänge begrenzt. Sind beide Enden E1, E2 der Szintillationsfasern 11 jeweils an APDs eines Arrays 13, 13' angeschlossen, so können bis zu doppelt so lange Szintillationsfasern 11 eingesetzt werden.

Die Arrays 13, 13' sind im Vergleich zu Photomultipliern sehr klein und kostengünstig. Sie werden beispielsweise von der Firma HAMAMATSU unter der Produktbezeichnung Multi-Pixel Photon Counter vertrieben. Dort sind beispielsweise Arrays mit einer aktiven Fläche von 1 x 1 mm erhältlich, auf der 100, 400 oder 1600 APDs angeordnet sind, und Arrays 13 mit einer aktiven Fläche von 3 x 3 mm erhältlich auf der 900, 3600 oder 14400 APDs angeordnet sind.

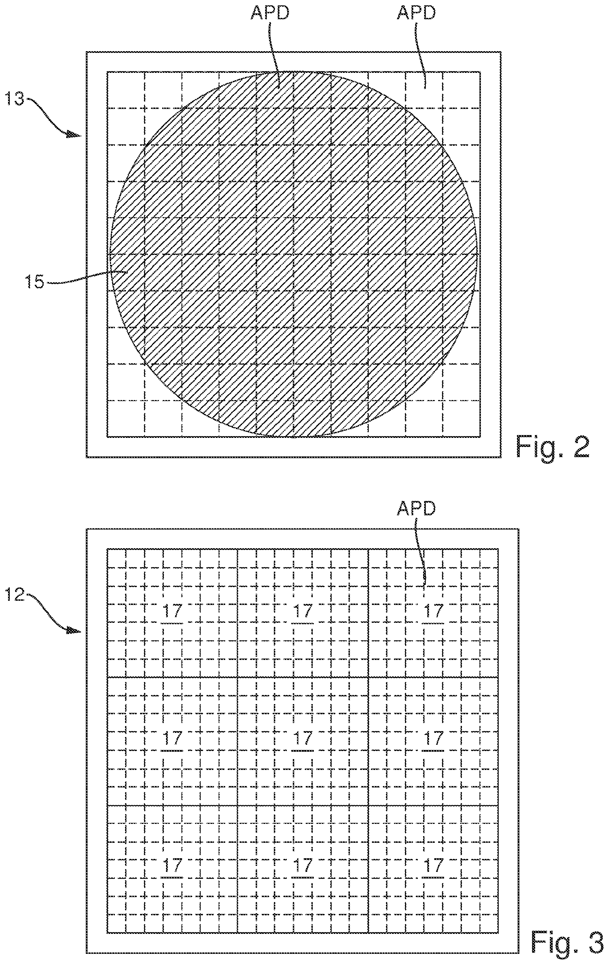

Szintillationsfasern 11 sind beispielsweise mit einem Durchmesser in der Größenordnung von 1 mm bzw. bei Fasern mit eckigem Querschnitt mit einer Querschnittsfläche in der Größenordnung von 1 mm² erhältlich, und damit optimal für den Anschluss an diese Arrays 13 geeignet. Fig. 2 zeigt ein an ein Array 13 angeschlossenes Faserende 15 mit rundem Querschnitt. Das Faserende 15 weist eine Querschnittsfläche auf, die mehrere APDs, hier knapp 100 APDs, überdeckt. Werden mehrere Szintillationsfasern 11 parallel eingesetzt, so werden vorzugsweise mehrere Szintillationsfasern 11 an ein Array 13 angeschlossen. Fig. 3 zeigt neun an ein Array 13 angeschlossene Faserenden 17 mit rechteckigem Querschnitt.

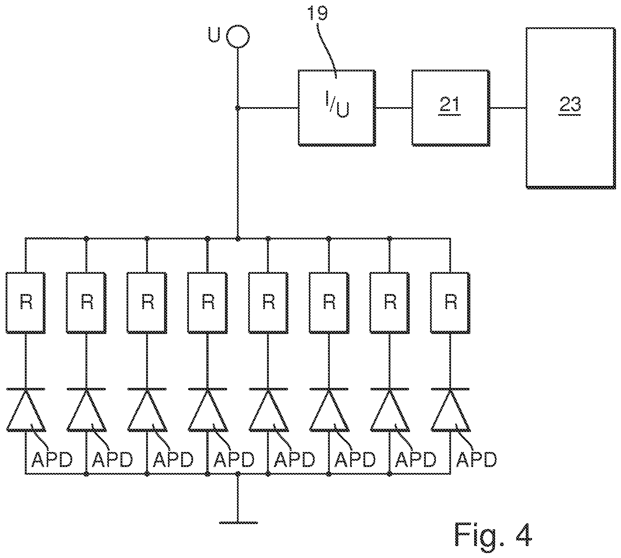

Die APD's wandeln darauf auftreffendes Licht in ein elektrisches Signal um. Mit diesen Arrays 13 ist es möglich über die Querschnittsfläche der Enden E1, E2 der Szintillationsfasern 11 räumlich verteilt eintreffende äußerst geringe Lichtmengen zu detektieren. Dabei werden die APDs vorzugsweise im Geiger Mode betrieben. Fig. 4 zeigt eine entsprechende Messschaltung. Dort liegt an jeder APD in Sperrrichtung eine konstante für alle APD's eines Arrays 13 gleiche Spannung U an, die oberhalb der Durchbruchsspannung der Dioden liegt. In diesem Zustand führt bereits ein einzelnes auf ein APD auftreffendes Photon zu einer Geiger Entladung, die als Ausgangsstrom über einen zu der APD in Serie geschalteten Löschwiderstand R abfließt. Entsprechend ist hierüber eine hochgenaue Messung der erzeugten Lichtmenge und damit der Strahlungsintensität möglich. Die Größe des Ausgangsstroms ist konstant und unabhängig von der Anzahl der Photonen, die zur Entladung geführt haben. Der Geiger Mode bietet den Vorteil, dass eine Vielzahl von APD's, wie in Fig. 4 schematisch dargestellt, elektrisch parallel geschaltet werden können. Der Ausgangsstrom der Parallelschaltung ist dann gleich der Summe der Ausgangsströme der einzelnen APDs in denen eine Entladung stattgefunden hat, und wird beispielsweise über einen Strom-Spannungs Wandler 19 in eine Spannung umgewandelt, die einer Komparator Schaltung 21 zugeführt wird. Wandler 19 und Komparator Schaltung 21 sind vorzugsweise in dem Array Baustein integriert und daher in den übrigen Figuren nicht separat dargestellt. Am Ausgang der Komparator Schaltung 21 steht damit ein Ausgangssignal A zur Verfügung, das der Anzahl der parallel geschalteten ADPs entspricht, die zu diesem Zeitpunkt t mindestens ein Photon empfangen haben. Dabei ermöglicht der Geiger Mode Betrieb ein sehr hohes Maß an Flexibilität hinsichtlich der Signalaufnahme und Auswertung. Es können beispielsweise alle an die Szintillationsfasern 11 angeschlossenen APDs parallel geschaltet werden, es können alle an die ersten Enden E1 und/oder alle an die zweiten Enden E2 mehrerer parallel betriebener Szintillationsfasern 11 angeschlossenen APDs parallel geschaltet werden. Ebenso können zwei oder mehr Arrays 13, 13' parallel betrieben werden. Hierdurch kann die Messsignalgewinnung sehr flexibel auf unterschiedlichste Messaufgaben zugeschnitten werden.

Die Ausgangssignale A werden als Ausgangssignale des jeweiligen Arrays 13 einer Messgerätelektronik 23 zugeführt, die daraus eine Impulsrate, d.h. die Anzahl der pro Zeiteinheit ausgelösten APDs bestimmt. Dabei können alle APDs aller Arrays 13, 13' parallel betrieben werden, indem die einzelnen Ausgangssignale A der Arrays 13, 13' zu einem Summensignal aufaddiert werden. Die anhand dieses Summensignals abgeleitete Impulsrate ist ein Maß für die insgesamt in allen Szintillationsfasern 11 entstandene Lichtmenge und damit ein Maß für die auf die zugehörigen Szintilliationsfasern 11 aufgetroffene Strahlungsintensität. Diese ist wiederum ein Maß für die zu messende bzw. zu überwachende physikalische Messgröße. Hieraus generiert die Messgerätelektronik 23 ein der gesuchten Messgröße entsprechendes Ausgangssignal, und stellt dieses einer Anzeige und/oder einer weiteren Verarbeitung zur Verfügung. Das Ausgangssignal wird beispielsweise über einen Stromausgang, einen digitalen Ausgang oder über einen Datenbusanschluss ausgegeben.

Zur Erzielung einer äußerst kompakten Bauform der erfindungsgemäßen Detektoren 7 werden vorzugsweise - wie in den in den Figuren 1, 7, 8 und 10 dargestellten Ausführungsbeispielen dargestellt - hohle Träger 9 eingesetzt und das bzw. die Arrays 13, 13' im Inneren des Trägers 9 angeordnet. Vorzugsweise wird auch die an die Arrays 13, 13' angeschlossene Messgerätelektronik 23 im Inneren des Trägers 9 angeordnet.

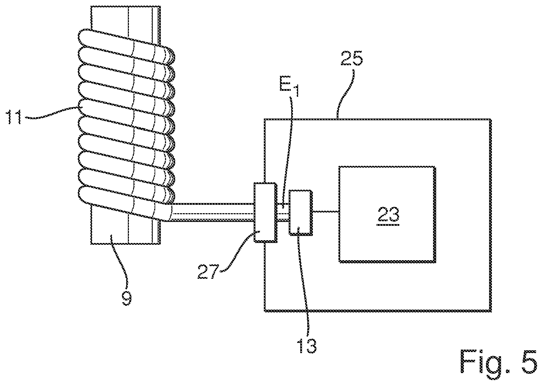

Eine Ausnahme hierzu bilden Anwendungen bei denen das Messgerät in explosionsfähigen Atmosphären eingesetzt werden. Dort ist es in der Regel gesetzlich vorgeschrieben, elektrische Komponenten, die Energien führen, die ausreichen, um einen Zündfunken zu erzeugen, in druckfest gekapselten Gehäusen anzuordnen. Da die Szintillationsfasern 11 selbst keine für den Explosionsschutz relevanten elektrischen Komponenten enthalten, können die Szintillationsfasern 11 auch in explosionsfähigen Atmosphären frei verlegt werden. In diesen Anwendungen werden daher bevorzugt erfindungsgemäße Messgeräte eingesetzt, bei denen die Arrays 13 und die Messgerätelektronik 23 in einem außerhalb des Trägers 9 angeordneten explosionsgeschützten Gehäuse 25 angeordnet sind, und die an die Arrays 13 angeschlossenen Enden E1 der Szintillationsfasern 11 über eine explosionsgeschützte Durchführung 27 in das Gehäuse 25 eingeführt sind. Ein Beispiel hierzu ist in Fig. 5 dargestellt.

Die erfindungsgemäßen Detektoren 7 bieten hohes Maß an Flexibilität hinsichtlich des von dem Detektor 7 messtechnisch zu erfassenden vom Strahler 5 durchstrahlten Bereichs und im Hinblick auf die erzielbaren Messergebnisse.

In der in Fig. 1 gezeigten Variante ist der Träger 9 eine rohrförmige Spindel, auf die eine Szintillationsfaser 11 mit konstanter Wicklungsdichte aufgewickelt ist. Die Höhe des messtechnisch erfassbaren Bereichs ist hierbei über die Wicklungsdichte innerhalb der durch die Gesamtlänge der Szintillationsfaser 11 gegebenen Grenzen einstellbar. Je größer der Wicklungsabstand ist, umso größer ist die Höhe des messtechnisch erfassbaren Bereichs. Ist nur ein Ende der Szintillationsfaser 11 an ein Array 13 aus APDs angeschlossen, wird dessen zur Anzahl der ausgelösten APDs proportionales Ausgangssignal der Messgerätelektronik 23 zugeführt. Diese bestimmt dann, wie oben beschrieben, die von der Messgröße abhängige auf die Szintillationsfaser 11 auftreffende Strahlungsintensität und leitet daraus die Messgröße ab. Sind zur Vergrößerung bzw. Verdopplung der maximal verwendbaren Faserlänge beide Enden E1, E2 der Szintillationsfaser 11 jeweils an ein Array 13, 13' angeschlossen, werden die Ausgangssignale der beiden Arrays 13, 13' der Messgerätelektronik 23 zugeführt, die dann anhand der Summe der Ausgangssignale die Strahlungsintensität bestimmt.

Werden beide Enden E1, E2 einer Szintillationsfaser 11 jeweils an ein Array 13, 13' angeschlossen, so kann die auf die Szintillationsfaser 11 auftreffende Strahlung alternativ oder zusätzlich anhand der Ausgangssignale der beiden Arrays 13, 13' Orten entlang der Szintillationsfaser 11 zugeordnet werden, an denen durch die auftreffende Strahlung Lichtblitze ausgelöst werden. Hierzu können z.B. die beiden nachfolgend beschriebenen Verfahren eingesetzt werden.

Ein erstes auf einer Laufzeitmessung beruhendes solches Verfahren ist in der DE 101 32 267 A1 im Detail beschrieben und mit den erfindungsgemäßen Messgeräten mit deutlich verbesserter Messgenauigkeit ausführbar. Ein an einem bestimmten Ort entlang der Szintillationsfaser 11 absorbiertes Strahlungsquant erzeugt einen Lichtblitz, dessen Licht nach einer vom Entstehungsort des Lichtblitzes abhängigen ersten Signallaufzeit t₁ bei dem einen Array 13 und nach einer vom Entstehungsort des Lichtblitzes abhängigen zweiten Signallaufzeit t₂ bei dem anderen Array 13' eintrifft. Anhand der Ausgangssignale der beiden Arrays 13, 13' wird nun von der Messgerätelektronik 23 eine Laufzeitdifferenz Δt = t₂ - t₁ zwischen den beiden Signallaufzeiten t₁, t₂ bestimmt. Die Laufzeitdifferenzen Δ t ergeben sich aufgrund der vom Entstehungsort abhängigen unterschiedlichen Laufstrecken des Lichts in der Szintillatorfaser 11. Sie werden anhand der Ausbreitungsgeschwindigkeit des Lichts in der Szintillationsfaser 11, bzw. anhand einer entsprechenden Messgerätkalibrierung dem Entstehungsort entlang der Szintillationsfaser 11 zugeordnet. Das erfindungsgemäße Messgerät bietet hier den Vorteil, dass über die Höhe des messtechnisch erfassten Bereichs eine extrem genaue Ortsauflösung erzielbar ist, da das Licht in der aufgewickelten Szintillationsfaser 11 eine volle Wicklungslänge durchlaufen muss um einen Wicklungsabstand in Höhe zurück zu legen.

Zur hochgenauen Füllstandsmessung oder zur Erstellung eines Dichteprofils über die messtechnisch von der Szintillationsfaser 11 erfasste Höhe H werden die Ausgangssignale A1, A2 der beiden Arrays 13, 13' der Messgerätelektronik 23 zugeführt, die fortlaufend die Laufzeitdifferenzen bestimmt und hieraus eine Häufigkeitsverteilung ableitet, die angibt mit welcher Häufigkeit die Laufzeitdifferenzen auftreten. Die Häufigkeit mit der eine bestimmte Laufzeitdifferenz auftritt, gibt die Strahlungsintensität wieder, der der dieser Laufzeitdifferenz zugeordnete Ort entlang der Szintillationsfaser 11 ausgesetzt ist.

Da die Szintillationsfasern 11 sehr dünn sind, können extrem geringe Wicklungsabstände, z.B. von einem Millimeter, realisiert werden. Hierdurch sind erstmals sehr feine Dichte-Profilmessung sowie mmgenaue Füllstandsmessungen möglich. Diese Genauigkeiten sind mit dem in der DE 101 32 267 A1 beschriebenen Messgerät, dass einen einzigen massiven Szintillationsstab verwendet, nicht erzielbar.

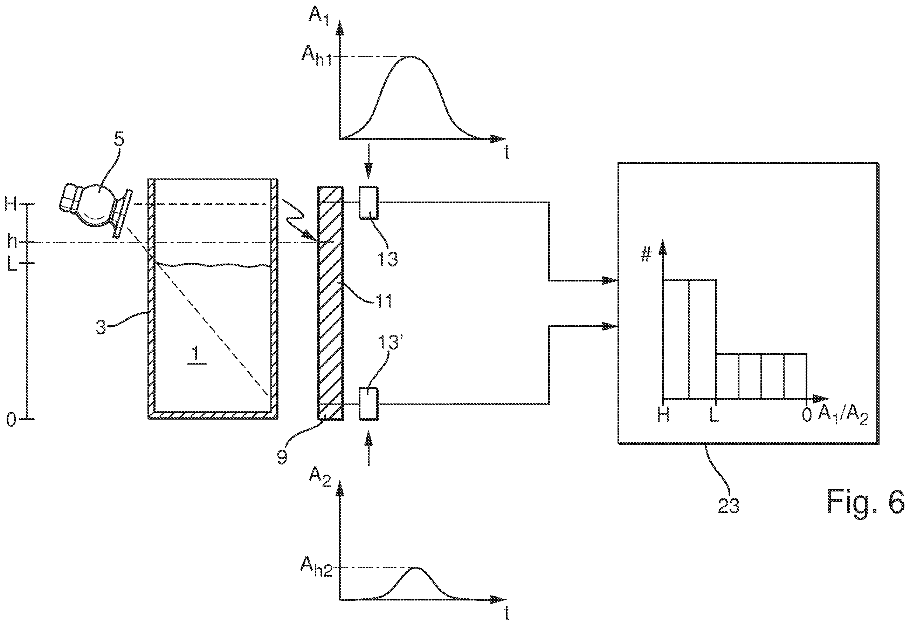

Ein zweites Verfahren beruht auf einem Amplitudenvergleich der Ausgangssignale A1, A2 der beiden Arrays 13, 13' und ist in Fig. 6 in einer Prinzipskizze dargestellt. Ein an einem bestimmten Ort h entlang der Szintillationsfaser 11 absorbiertes Strahlungsquant erzeugt einen Lichtblitz, dessen Licht auf dem Weg zu dem einen Array 13 vom Entstehungsort des Lichtblitzes abhängige eine erste Wegstrecke und auf dem Weg zu dem anderen Array 13' eine vom Entstehungsort des Lichtblitzes abhängige zweite Wegstrecke zurücklegt. Auf beiden Wegen erfährt das Licht eine von der Länge der jeweiligen Wegstrecke abhängige Dämpfung, die sich unmittelbar in der Amplitude A1, A2 der Ausgangssignale der beiden Arrays 13, 13' wieder spiegelt. Ausgelöst durch ein in der Nähe des Arrays 13 auf der Höhe h auf der Szintillationsfaser 11 auftreffendes Gammaquant liefert das Array 13, wie in Fig. 6 dargestellt, ein Ausgangssignal A1 mit vergleichsweise hoher Amplitude Aₕ₁, während das am anderen Ende der Szintillationsfaser 11 angeschlossene Array 13' in diesem Fall lediglich ein Ausgangssignal A2 mit sehr viel geringerer Amplitude Aₕ₂ liefert. Das Verhältnis A1/A2 der Amplituden der beiden Ausgangssignale ist abhängig vom Entstehungsort des Lichtblitzes. Das Verhältnis A1/A2 ist umso größer je näher der Entstehungsort an dem Array 13 liegt, dessen Amplitude A1 im Zähler des Verhältnisses steht und kann dementsprechend unmittelbar als Maß für die Höhe entlang des messtechnisch von der Szintillationsfaser 11 erfassten Bereichs herangezogen werden. Zur hochgenauen Füllstandsmessung oder zur Erstellung eines Dichteprofils über die messtechnisch von der Szintillationsfaser 11 erfasste Höhe H werden die Ausgangssignale A1, A2 der Messgerätelektronik 23 zugeführt, die fortlaufend die Verhältnisse der Amplituden der Ausgangssignale bildet und hieraus eine Häufigkeitsverteilung ableitet, die angibt mit welcher Häufigkeit # die Amplitudenverhältnisse A1/A2 auftreten. Dies kann wie in Fig. 6 in dem Funktionsblock der Messgerätelektronik 23 eingezeichnet in Form eines Histogramms erfolgen. Die Häufigkeit mit der ein bestimmtes Amplitudenverhältnis auftritt, gibt die Strahlungsintensität wieder, der der dem Amplitudenverhältnis zugeordnete Ort entlang der Szintillationsfaser 11 ausgesetzt ist.

Beide Verfahren können natürlich nicht nur mit einer einzigen Szintillationsfaser 11 sondern völlig analog auch mit mehreren parallel zueinander verlegten Szintillationsfasern 11 ausgeführt werden. Dabei bietet der Geiger Mode den Vorteil, dass alle an die ersten Enden E1 dieser Szintillationsfasern 11 angeschlossenen APDs entweder unmittelbar elektrisch parallel geschaltete werden, oder aber die zugehörigen Arrays 13 parallel betrieben werden, indem die Ausgangssignale dieser Arrays 13 zu einem Summensignal aufaddiert werden können. Das gleiche gilt natürlich für die zweiten Enden E2 dieser Szintillationsfasern 11.

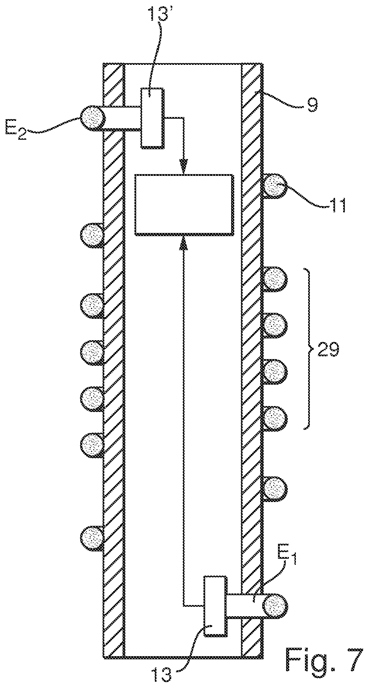

Anstelle einer über den erfassten Messbereich konstanten Wicklungsdichte können auch Detektoren 7 realisiert werden, bei denen mindestens eine der Szintillationsfasern 11 entlang der Längsachse des Trägers 9 mindestens einen Bereich 29 mit höherer Wicklungsdichte aufweist. Diese Variante ist in Fig. 7 dargestellt. Sie ist insb. in Verbindung mit den beiden zuvor beschriebenen ortsauflösenden Verfahren von Vorteil, da hier über die Bereiche 29 mit höherer Wicklungsdichte gezielt Zonen vorgegeben bzw. ausgewählt werden können, in denen eine höhere Ortsauflösung der eintreffenden Strahlungsintensität gewünscht ist. Dies können z.B. im Rahmen einer Füllstandsmessung Zonen sein, in denen ein Über-oder Unterschreiten eines vorgegebenen Füllstands hochgenau überwacht werden soll. Ebenso können dies Dichtemessungen sein, bei denen in einzelnen Zonen, z.B. in Zonen, in denen sich Trennschichten zwischen einzelnen Füllgutlagen ausbilden können, ein besonders detailliertes Dichteprofil erstellt werden soll.

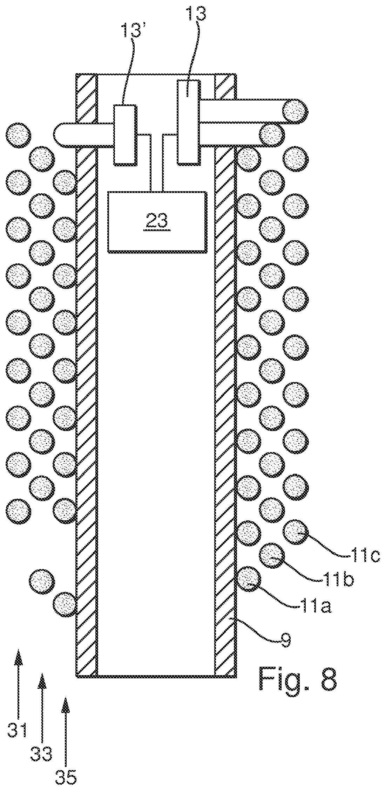

Fig. 8 zeigt einen Schnitt durch eine weitere Variante, bei der zur Erhöhung der durchstrahlten Masse Szintillationsfasern 11a, 11b, 11c in zwei oder mehrer Wicklungslagen 31, 33, 35 übereinander gewickelt werden. Dabei kann je nach Höhe des messtechnisch zu erfassenden Bereich eine einzige Szintillationsfaser 11 mehrlagig gewickelt werden, oder es kann - wie hier dargestellt - für jede Wicklungslage 31, 33, 35 eine eigene Szintillationsfaser 11a, 11b, 11c verwendet werden. Werden mehrere Szintillationsfasern 11 eingesetzt können diese parallel zueinander an ein oder mehrere Arrays 13 mit im Geiger Mode betriebenen APDs angeschlossen werden.

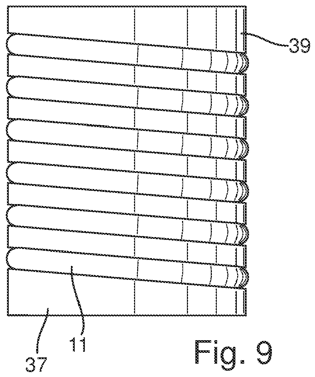

Zur Erhöhung der Querschnittsfläche des messtechnisch erfassten Bereichs können als Träger 9 auch flächige Gebilde, wie z.B. ebene oder in Nachbildung der Behältergeometrie gewölbte Platten 37 eingesetzt werden, auf die eine oder mehrere Szintillationsfasern 11 in einer oder mehreren Lagen aufgewickelt sind. Diese Variante ist in Fig. 9 dargestellt. Als Platten 37 eignen sich beispielsweise ebene oder gewölbte Leiterplatten, die vorzugsweise seitlich mit Einkerbungen 39 für die Aufnahme der Szintillationsfasern 11 versehen sind.

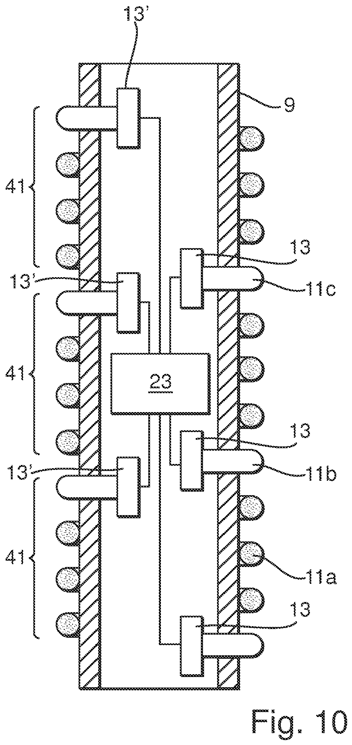

Um die Höhe des messtechnisch erfassten Bereichs zu vergrößern, können entlang eines entsprechend langen Trägers 9 auch mehrere Szintillationsfasern 11 übereinander auf den Träger 9 aufgewickelt werden, die jeweils einen Teilbereich 41 des Trägers 9 umschließen. Diese Variante ist in Fig. 10 dargestellt und wird beispielsweise verwendet, um Füllstände in sehr hohen Behältern 3 zu messen. Um hier eine homogene Abdeckung der gesamten messtechnisch zu erfassenden Höhe zu erzielen, grenzen die Teilbereiche 41 unmittelbar aneinander an. Alternativ können die einzelnen Teilbereich 41 natürlich auch auf ausgewählten Höhen entlang des Trägers 9 angeordnet werden, z.B. auf Höhen, die im Bereich vorgegebener Füllstände liegen, deren Über- bzw. Unterschreiten überwacht werden soll. Auch hier können natürlich anstelle der dargestellten einzelnen Szintillationsfasern 11 in jedem Teilbereich 41 mehrere Wicklungslagen einer oder mehrerer Szintillationsfasern 11 übereinander vorgesehen werden, wie dies in Fig. 8 dargestellt ist.

Auch hier kann entweder jeweils ein Ende E1 oder beide Enden E1 und E2 jeder Szintillationsfaser 11a, 11b, 11can ein Array 13 angeschlossen werden. Die Messung kann nun je nach Anwendung und gewünschter Messgenauigkeit und Auflösung auf vielfältige Art und Weise ausgeführt werden. Im einfachsten Fall werden alle insgesamt vorgesehenen APDs parallel betrieben. D.h. es werden alle APDs jedes Arrays 13, 13' elektrisch parallel geschaltet und die Ausgangssignale A aller Arrays 13, 13' in der Messgerätelektronik 23 zu einem Summensignal zusammengefasst, und hieraus die insgesamt vom Detektor 7 aufgenommene Strahlungsleistung bestimmt. Alternativ kann die Strahlungsleistung für jeden Bereich einzeln bestimmt werden.

Sind beide Enden E1, E2 der Szintillationsfasern 11a, 11b, 11c jeweils an ein Array 13, 13' angeschlossen, so kann natürlich auch hier anhand der beiden oben beschriebenen Verfahren ein ortsabhängiges Strahlungsprofil abgeleitet werden, dass die Strahlungsleistung als Funktion des Ortes über die gesamte von einzelnen oder allen Teilbereichen 41 abgedeckte Höhe des Detektors 7 wiedergibt.
- 1: Füllgut
- 3: Behälter
- 5: Strahler
- 7: Detektor
- 9: Träger
- 11: Szintillationsfaser
- 13: Array von Avalanche Photodioden
- 15: Faserende
- 17: Faserende
- 19: Strom-Spannungs Wandler
- 21: Komparator
- 23: Messgerätelektronik
- 25: Gehäuse
- 27: Durchführung
- 29: Bereich des Trägers
- 31: Wicklungslage
- 33: Wicklungslage
- 35: Wicklungslage
- 37: Platte
- 39: Einkerbungen
- 41: Teilbereich des Trägers

## Patentansprüche

1. Radiometrisches Messgerät zur Messung eines Füllstands oder einer Dichte eines in einem Behälter (3) befindlichen Füllguts (1), und/oder zur Überwachung eines Über- oder Unterschreiten eines vorgegebenen Grenzwerts für den Füllstand oder die Dichte, mit
- einem außenseitlich am Behälter (3) montierten radioaktiven Strahler (5), der im Betrieb radioaktive Strahlung durch den Behälter (3) sendet, und
- einem auf einer dem Strahler (5) gegenüberliegenden Seite außerhalb des Behälters (3) angeordneten Detektor (7), der dazu dient eine durch den Behälter (3) hindurch dringende von dem Füllstand oder der Dichte abhängige Strahlungsintensität zu empfangen und in ein elektrisches Ausgangssignal umzuwandeln, **dadurch gekennzeichnet, dass** der Detektor (7) einen Träger (9, 37) aufweist, auf den mindestens eine Szintillationsfaser (11) aufgewickelt ist, die darauf auftreffende radiometrische Strahlung in Lichtblitze umwandelt, deren Licht sich in der jeweiligen Szintillationsfaser (11) zu deren Enden (E1, E2) hin ausbreitet,
-- der mindestens ein Array (13, 13') von im Geiger Mode betriebenen Avalanche Photodioden (APD) umfasst, die darauf auftreffendes Licht in ein elektrisches Signal umwandeln, wobei
--- mindestens ein Ende (E1, E2) jeder Szintillationsfaser (11) an Avalanche Photodioden eines der Arrays (13, 13') angeschlossen ist, und
-- der eine an die Avalanche Photodioden (APD) angeschlossene Messgerätelektronik (23) aufweist, die anhand der elektrischen Signale der Avalanche Photodioden (APD) das elektrische Ausgangssignal erzeugt.

2. Radiometrisches Messgerät nach Anspruch 1,
**dadurch gekennzeichnet,**
**dass** die an die Arrays (13) angeschlossenen Enden (E1, E2) der Szintillationsfasern (11) eine Querschnittsfläche aufweisen, die mehrere Avanlanche Photodioden (APD) überdeckt.

3. Radiometrisches Messgerät nach Anspruch 1,
**dadurch gekennzeichnet**,
dassalle an ein Ende (E1, E2) einer Szintillationsfaser (11) angeschlossenen Avalanche Photodioden (APD) elektrisch parallel geschaltet sind.

4. Radiometrisches Messgerät nach Anspruch 1,
**dadurch gekennzeichnet,**
**dass** alle Avalanche Photodioden (APD) eines Arrays (13) elektrisch parallel geschaltet sind.

5. Radiometrisches Messgerät nach Anspruch 1,
**dadurch gekennzeichnet,**
**dass** alle Arrays (13, 13') oder die Arrays (13, 13') und die Messgerätelektronik (23) im Inneren des Trägers (9) angeordnet sind.

6. Radiometrisches Messgerät nach Anspruch 1, **dadurch gekennzeichnet,**
- **dass** die Arrays (13) und die Messgerätelektronik (23) in einem
außerhalb des Trägers (9) angeordneten explosionsgeschützten
Gehäuse (25) angeordnet sind, und
- **dass** die an die Arrays (13) angeschlossenen Enden (E1) der Szintillationsfasern
(11) über eine explosionsgeschützte Durchführung (27) in das Gehäuse
(25) eingeführt sind.

7. Radiometrisches Messgerät nach Anspruch 1, **dadurch gekennzeichnet,**
**dass** entlang des Trägers (9) mehrere Szintillationsfasern (11a, 11b, 11c) aufgewickelt sind, die jeweils einen Teilbereich (41) des Trägers (9) umschließen.

8. Radiometrisches Messgerät nach Anspruch 1, **dadurch gekennzeichnet,**
**dass** mindestens eine der Szintillationsfasern (11) entlang einer Längsachse des Trägers (9) mindestens einen Bereich (29) mit einer Wicklungsdichte aufweist, die in Bezug zu einer Wicklungsdichte außerhalb des Bereichs (29) höher ist.

9. Radiometrisches Messgerät nach Anspruch 1, **dadurch gekennzeichnet,**
**dass** eine oder mehrere Szintillationsfasern (11a, 11b, 11c) in zwei oder mehr Wicklungslagen (31, 33, 35) übereinander gewickelt sind.

10. Verfahren zum Betrieb eines Messgerät nach Anspruch 1, bei dem
beide Enden (E1, E2) einer oder mehrere parallel zueinander verlaufender Szintillationsfasern (11) jeweils an ein Array (13, 13') angeschlossen sind, und die Messgerätelektronik (23) anhand der Ausgangssignale der an die ersten Enden (E1) der Szintillationsfasern (11) und der Ausgangssignale der an die zweiten Enden (E2) der Szintillationsfasern (11) angeschlossenen Arrays (13, 13') ein Strahlungsintensitätsprofil ableitet, das die auf die Szintillationsfasern (11) auftreffende Strahlungsintensität als Funktion des Ortes entlang der Szintillationsfasern (11) wiedergibt.

11. Verfahren zum Betrieb eines Messgeräts nach Anspruch 10, bei dem
- anhand der Ausgangssignale der an die ersten Enden (E1)
angeschlossenen Arrays (13) und der an die zweiten Enden (E2)
angeschlossenen Arrays (13') fortwährend Laufzeitdifferenzen zwischen
den beiden Signallaufzeiten, die Licht eines in einer Szintillationsfaser (11) ausgelösten Lichtblitzes auf den beiden vom Entstehungsort des Lichtblitzes abhängigen unterschiedlichen Laufstrecken zu deren Enden (E1, E2) benötigt, bestimmt werden,
- eine Häufigkeitsverteilung aufgezeichnet wird, die angibt mit welcher Häufigkeit die Laufzeitdifferenzen auftreten, und
- hieraus das Strahlungsintensitätprofil bestimmt wird, das die Strahlungsintensität angibt, der die den Laufzeitdifferenzen zugeordneten Orte entlang der Szintillationsfasern 11 ausgesetzt sind.

12. Verfahren zum Betrieb eines Messgeräts nach Anspruch 10, bei dem
- Licht der in den Szintillationsfasern (11) durch radiometrisch Strahlung ausgelösten Lichtblitzes auf den beiden vom Entstehungsort des Lichtblitzes abhängigen unterschiedlichen Laufstrecken zu deren Enden (E1, E2) eine von der Länge der jeweiligen Lauftrecke abhängige Dämpfung erfährt, die sich in der Amplitude (A1, A2) der Ausgangssignale der an die Szintillationsfasern (11) angeschlossenen Arrays (13, 13') wieder spiegelt,
- fortwährend die Amplitudenverhältnisse (A1/A2) zwischen den Amplituden (A1) der Ausgangssignale der an die ersten Enden (E1) angeschlossenen Arrays (13) und den Amplituden (A2) der Ausgangssignale der an die zweiten Enden (E2) angeschlossenen Arrays (13') gebildet werden,
- eine Häufigkeitsverteilung aufgezeichnet wird, die angibt mit welcher Häufigkeit die Amplitudenverhältnisse (A1/A2) auftreten, und
- hieraus ein Strahlungsintensitätprofil bestimmt wird, das die Strahlungsintensität angibt, der die den Amplitudenverhältnissen (A1/A2) zugeordneten Orte entlang der Szintillationsfasern (11) ausgesetzt sind.

## Claims

1. Radiometric measuring device designed for the measurement of a level or density of a medium (1) located in a container (3), and/or designed to monitor the undershooting or overshooting of a predefined limit value for the level or the density, with
- a radioactive emitter (5) mounted on the exterior of the container (3), said emitter emitting radioactive radiation through the container (3) during operation, and
- a detector (7) arranged on a side opposite the emitter (5) on the outside of the container (3), said detector serving to receive radiation intensity, which depends on the level or the density and passes through the container, and to convert it to an electrical output signal,
**characterized in that**
the detector (7) has a carrier (9, 37) on which at least one scintillation fiber (11) is wound, said fiber converting the incident radiometric radiation into flashes of light whose light propagates in the scintillation fiber (11) as far as the ends of the fiber (E1, E2),
-- said detector comprising at least one array (13, 13') of avalanche photodiodes (APD) operated in Geiger mode, said photodiodes converting the incident light impacting on them into an electrical signal,
--- wherein at least one end (E1, E2) of each scintillation fiber (11) is connected to avalanche photodiodes of one of the arrays (13, 13'), and
-- wherein the detector features a measuring device electronics module (23) that is connected to the avalanche photodiodes (APD) and that generates the electrical output signal using the electrical signals of the avalanche photodiodes (APD).

2. Radiometric measuring device as claimed in Claim 1,
**characterized in that**
the ends (E1, E2) of the scintillation fibers (11) connected to the arrays (13) have a cross-sectional area which covers several avalanche photodiodes (APD).

3. Radiometric measuring device as claimed in Claim 1,
**characterized in that**
all of the avalanche photodiodes (APD) connected to an end (E1, E2) of a scintillation fiber (11) are switched electrically in parallel.

4. Radiometric measuring device as claimed in Claim 1,
**characterized in that**
all the avalanche photodiodes (APD) of an array (13) are switched electrically in parallel.

5. Radiometric measuring device as claimed in Claim 1,
**characterized in that**
all the arrays (13, 13') or the arrays (13, 13') and the measuring device electronics module (23) are arranged in the interior of the carrier (9).

6. Radiometric measuring device as claimed in Claim 1,
**characterized in that**
- the arrays (13) and the measuring device electronics module (23) are arranged in an explosion-protected housing (25) arranged outside the carrier (9), and
- the ends (E1) of the scintillation fibers (11) that are connected to the arrays are introduced into the housing (25) via an explosion-proof bushing (27).

7. Radiometric measuring device as claimed in Claim 1,
**characterized in that**
several scintillation fibers (11a, 11b, 11c) are wound along the carrier (9), each enclosing a section (41) of the carrier (9).

8. Radiometric measuring device as claimed in Claim 1,
**characterized in that**
along a longitudinal axis of the carrier (9), at least one of the scintillation fibers (11) has at least one area (29) with a winding density which is greater in relation to a winding density outside the area (29).

9. Radiometric measuring device as claimed in Claim 1,
**characterized in that**
one or more of the scintillation fibers (11a, 11b, 11c) are wound on top of one another in one or more winding layers (31, 33, 35).

10. Procedure for the operation of a measuring device as claimed in Claim 1, wherein both ends (E1, E2) of one or more scintillation fibers (11) running parallel to one another are connected to an array (13, 13'), and the measuring device electronics module (23) uses the output signals of the arrays (13, 13') connected to the first ends (E1) of the scintillation fibers (11) and the output signals of the arrays (13, 13') connected to the second ends (E2) of the scintillation fibers (11) to deduce a radiation intensity profile that reflects the radiation intensity impacting on the scintillation fibers as a function of the position along the scintillation fibers (11).

11. Procedure for the operation of a measuring device as claimed in Claim 10, wherein
- on the basis of the output signals of the arrays (13) connected to the first ends (E1) and of the arrays (13') connected to the second ends (E2), run time differences are continuously determined between the two signal run times required by light from a light flash triggered in a scintillation fiber (11) on the two different run paths to the path ends (E1, E2), said distances being dependent on the place of origin of the light flash,
- a frequency distribution is recorded that indicates the frequency with which the run-time differences occur, and
- on the basis of this the radiation intensity profile is determined that indicates the radiation intensity to which the positions - located along the scintillation fibers (11) - are exposed, said positions being assigned to the run-time differences.

12. Procedure for the operation of a measuring device as claimed in Claim 10, wherein
- light from the flash of light triggered in the scintillation fibers (11) by radiometric radiation undergoes attenuation - which depends on the length of the path - on the two different paths, which depend on the place of origin of the light flash, to the path ends (E1, E2), said attenuation being reflected in the amplitude (A1, A2) of the output signals of the arrays (13, 13') connected to the scintillation fibers (11),
- the amplitude ratios (A1/A2) between the amplitudes (A1) of the output signals of the arrays (13) connected to the first ends (E1) and the amplitudes (A2) of the output signals of the arrays (13') connected to the second ends (E2) are formed continuously,
- a frequency distribution is recorded that indicates the frequency with which the amplitude ratios (A1/A2) occur, and
- on the basis of this the radiation intensity profile is determined that indicates the radiation intensity to which the positions - located along the scintillation fibers (11) - are exposed, said positions being assigned to the amplitude ratios (A1/A2).

## Revendications

1. Appareil de mesure radiométrique destiné à la mesure d'un niveau ou d'une densité d'un produit (1) se trouvant dans un réservoir (3), et/ou destiné à la surveillance d'un dépassement par excès ou par défaut d'un seuil prédéfini pour le niveau ou la densité, avec
- un émetteur radioactif (5) monté à l'extérieur du réservoir (3), lequel émetteur émet, en fonctionnement, un rayonnement radioactif à travers le réservoir (3), et
- un détecteur (7) disposé sur un côté opposé de l'émetteur (5) à l'extérieur du réservoir (3), lequel détecteur sert à recevoir une intensité de rayonnement dépendant du niveau ou de la densité, et à la convertir en un signal de sortie électrique,
**caractérisé**
**en ce que** le détecteur (7) comporte un support (9, 37), sur lequel est enroulé au moins une fibre de scintillation (11), qui convertit le rayonnement incident frappant le détecteur en éclairs lumineux, dont la lumière se propage dans la fibre de scintillation (11) respective jusqu'à leurs extrémités (E1, E2),
-- lequel détecteur comprend au moins un réseau (13, 13') de photodiodes à avalanche (APD) fonctionnant en mode Geiger, qui convertissent la lumière incidente en un signal électrique,
--- au moins une extrémité (E1, E2) de chaque fibre de scintillateur (11) étant raccordée aux photodiodes à avalanche de l'un des réseaux (13, 13'), et
-- lequel détecteur comprend une électronique d'appareil de mesure (23) raccordée aux photodiodes à avalanche (APD), qui génère le signal de sortie électrique sur la base des signaux électriques des photodiodes à avalanche (APD).

2. Appareil de mesure radiométrique selon la revendication 1,
**caractérisé**
**en ce que** les extrémités (E1, E2) raccordés aux réseaux (13) des fibres de scintillation (11) présentent une superficie de section qui recouvre plusieurs photodiodes à avalanche (APD).

3. Appareil de mesure radiométrique selon la revendication 1,
**caractérisé**
**en ce que** toutes les photodiodes à avalanche (APD) raccordées à une extrémité (E1, E2) d'une fibre de scintillation (11) sont couplées électriquement en parallèle.

4. Appareil de mesure radiométrique selon la revendication 1,
**caractérisé**
**en ce que** toutes les photodiodes à avalanche (APD) d'un réseau (13) sont couplées électriquement en parallèle.

5. Appareil de mesure radiométrique selon la revendication 1,
**caractérisé**
**en ce que** tous les réseaux (13, 13') ou les réseaux (13, 13') et l'électronique d'appareil de mesure (23) sont disposés à l'intérieur du support (9).

6. Appareil de mesure radiométrique selon la revendication 1,
**caractérisé**
- **en ce que** les réseaux (13) et l'électronique d'appareil de mesure (23) sont disposés dans un boîtier (25) antidéflagrant disposé à l'extérieur du support (9), et
- **en ce que** les extrémités (E1) - raccordées aux réseaux - des fibres de scintillation (11) sont introduites dans le boîtier (25) à travers un passage (27) antidéflagrant.

7. Appareil de mesure radiométrique selon la revendication 1,
**caractérisé**
**en ce que** plusieurs fibres de scintillation (11a, 11b, 11c) sont enroulées, lesquelles renferment chacune une zone partielle (41) du support (9).

8. Appareil de mesure radiométrique selon la revendication 1,
**caractérisé**
**en ce qu'**au moins l'une des fibres de scintillation (11) présente, le long d'un axe longitudinal du support (9), au moins une zone (29) avec une densité d'enroulement, qui est supérieure par rapport à une densité d'enroulement à l'extérieur de la zone (29).

9. Appareil de mesure radiométrique selon la revendication 1,
**caractérisé**
**en ce qu'**une ou plusieurs fibres de scintillation (11a, 11b, 11c) sont enroulées l'une sur l'autre dans deux ou plusieurs couches d'enroulement (31, 33, 35).

10. Procédé destiné au fonctionnement d'un appareil de mesure selon la revendication 1, pour lequel les deux extrémités (E1, E2) d'une ou de plusieurs fibres de scintillation (11) s'étendant parallèlement les unes par rapport aux autres sont chacune raccordées à un réseau (13, 13'), et l'électronique d'appareil de mesure (23) déduit un profil d'intensité de rayonnement sur la base des signaux de sortie des réseaux (13, 13') raccordés aux premières extrémités (E1) des fibres de scintillation (11) et des signaux de sortie des réseaux (13, 13') raccordés aux secondes extrémités (E2) des fibres de scintillation (11), lequel profil reflète l'intensité de rayonnement apparaissant sur les fibres de scintillation en tant que fonction de l'emplacement le long des fibres de scintillation (11).

11. Procédé destiné au fonctionnement d'un appareil de mesure selon la revendication 10, pour lequel
- sont déterminées - sur la base des signaux de sortie des réseaux (13) raccordés aux premières extrémités (E1) et des réseaux (13') raccordés aux secondes extrémités (E2) - des différences de temps de propagation continues entre les deux temps de propagation des signaux, que nécessite la lumière d'un éclair lumineux déclenché dans une fibre de scintillation (11) sur les deux distances différentes par rapport à leurs extrémités (E1, E2), lesquelles distances dépendent de l'emplacement d'origine de l'éclair lumineux,
- est enregistrée une distribution de fréquence, laquelle distribution spécifie la fréquence avec laquelle les différences de temps de propagation surviennent, et
- on en détermine le profil d'intensité de rayonnement, qui indique l'intensité de rayonnement à laquelle sont exposés les emplacements - le long des fibres de scintillation (11) - affectés aux différences de temps de propagation.

12. Procédé destiné au fonctionnement d'un appareil de mesure selon la revendication 10, pour lequel
- la lumière de l'éclair déclenché par le rayonnement radiométrique dans les fibres de scintillation (11) sur les deux distances différentes par rapport à leurs extrémités, dépendantes du lieu d'origine de l'éclair lumineux, subit une atténuation dépendant de la longueur de la distance respective, lequel amortissement se reflète dans l'amplitude (A1, A2) des signaux de sortie des réseaux (13, 13') raccordés aux fibres de scintillation (11),
- les rapports d'amplitude (A1/A2) entre les amplitudes (A1) des signaux de sortie des réseaux (13) raccordés aux premières extrémités (E1) et les amplitudes (A2) des signaux de sortie des réseaux (13') raccordés aux secondes extrémités (E2) sont formés continuellement,
- est enregistrée une distribution de fréquence, laquelle distribution spécifie la fréquence avec laquelle les rapports d'amplitude (A1/A2) surviennent, et
- on en détermine un profil d'intensité de rayonnement, qui indique l'intensité de rayonnement à laquelle sont exposés les emplacements - le long des fibres de scintillation (11) - affectés aux rapports d'amplitude (A1/A2).
